# FASCICULE DE BREVET EUROPEEN

(11) **EP 1 586 964 B1**
(45) Date de publication et mention de la délivrance du brevet: **29.05.2013**
(21) Numéro de dépôt: 05007723.9
(22) Date de dépôt: 08.04.2005
(51) Int. Cl.: G05B 19/042

(54) **Procédé de fonctionnement d'un actionneur de volet roulant et dispositif pour sa mise en oeuvre**
Vorrichtung und Verfahren zum Betrieb des Aktuators eines Rollladens
Method and device for operating a rollerblind actuator

(30) Priorité: 09.04.2004 FR 0403739; 10.06.2004 FR 0406284
(43) Date de publication de la demande: 19.10.2005
(73) Titulaire: Somfy SAS, 74300 Cluses (FR)
(72) Inventeur: Grehant, Bernard, 74300 Nancy-Sur-Cluses (FR); Froidure, Cyrille, 74140 Saint Cergues (FR); Maistre, Valérie, 74300 Thyez74300 Thyez (FR); Violland, Paul, 74970 Marignier (FR)
(74) Mandataire: Bugnion Genève

(56) Documents cités:
- EP-A- 0 426 577
- FR-A- 2 802 007
- FR-A- 2 832 451

## Description

L'invention concerne un procédé de fonctionnement d'un actionneur défini selon le préambule de la revendication 1. Elle concerne également un dispositif permettant la mise en oeuvre d'un tel procédé.

De tels actionneurs sont utilisés pour manoeuvrer, grâce à l'énergie mécanique fournie par le moteur, des éléments mobiles de fermeture, d'occultation ou de protection solaire. Un utilisateur peut commander les déplacements de cet élément par des appuis sur des touches de commande du boîtier de commande.

Dans les cas de boîtiers de commande très simples ne comprenant que deux touches associées aux deux sens de déplacement de l'élément, voire même ne comprenant qu'une touche permettant de commander de manière séquentielle les déplacements de l'élément mobile dans les deux sens et son arrêt, il apparaît nécessaire de prévoir un outil spécifique permettant de configurer l'actionneur, en définissant, par exemple, une fin de course haute, une fin de course basse, une position intermédiaire préférée ou encore en associant les différentes touches du boîtier de commande à un sens de rotation du moteur.

Ces opérations de configuration peuvent être effectuées lors de l'installation de l'actionneur, mais également pendant le cycle de vie du produit lors d'opérations de maintenance par exemple. Certaines étapes de configuration telles que les enregistrements de positions de fin de course peuvent être effectuées automatiquement si les actionneurs disposent de moyens électroniques le permettant.

Il apparaît très intéressant de définir un procédé de fonctionnement permettant d'éviter d'avoir recours à un outil spécifique de configuration. Ce procédé doit permettre de réaliser des opérations manuelles de configuration ou de lancer des opérations automatiques de configuration en ayant uniquement recours au boîtier de commande de l'actionneur.

Pour résoudre ce problème, il est connu de définir différents modes de fonctionnement de l'actionneur dans lesquels de mêmes actions sur le boîtier de commande sont interprétées de manières différentes.

On connaît par exemple, de la demande EP 0 822 315, un dispositif de commande de l'alimentation d'un moteur électrique asynchrone dans lequel, une mise en court-circuit des lignes de phase permettant la rotation du moteur dans un premier sens et dans un deuxième sens par un appui simultané sur des touches de commande de rotation du moteur dans le premier sens et dans le deuxième sens place une unité de commande dans un mode de configuration. Un tel dispositif peut fonctionner avec certains types de boîtiers de commande seulement. En particulier, ce dispositif ne peut pas fonctionner avec des boîtiers de commande de type inverseur à position fixe ou momentanée avec exclusion mécanique.

On connaît du brevet US 6,078,159 un dispositif de manoeuvre d'un élément de fermeture. Le dispositif comprend un boîtier de commande muni de deux touches permettant respectivement de commander les déplacements d'un élément mobile dans un premier sens et dans un deuxième sens. Pour placer ce dispositif dans un mode de configuration, il est nécessaire d'actionner au moins deux fois l'une ou l'autre des touches dans une plage temporelle prédéfinie et inférieure à la durée d'actionnement permettant la commande du mouvement de l'élément mobile. Ainsi, lorsqu'on veut commander le déplacement de l'élément mobile, il est nécessaire d'actionner la touche de commande pendant une durée supérieure à celle de la plage temporelle prédéfinie. Ce genre de procédure permettant le passage du dispositif dans un mode de configuration est particulièrement mal aisé lorsque le boîtier de commande est un inverseur à position fixe.

De plus, il est particulièrement dangereux de lier l'entrée dans un mode de configuration à l'apparition d'une suite d'impulsions de brève durée : en effet, des parasites énergétiques sur le réseau de distribution peuvent être interprétés comme une telle séquence d'impulsions.

On connaît également du brevet FR 2 654 229, un procédé de commande d'un moteur. Dans ce procédé, un appui simultané pendant plus de quatre secondes sur les touches commandant la rotation du moteur dans les deux sens opposés est interprété comme un ordre de mise en mode de configuration. Dans ce mode, une première étape consiste à ne pas prendre en compte les ordres de commande du moteur. Ce dispositif ne peut pas fonctionner avec des boîtiers de commande de type inverseur à position fixe ou momentanée avec exclusion mécanique.

On connaît également du brevet EP 0 426 577, un procédé de commande d'un moteur. Dans ce procédé, un appui simultané de longue durée, pendant plus de quatre secondes sur les touches commandant la rotation du moteur dans les deux sens opposés, est interprété comme un ordre de mise en mode de configuration.

Le but de l'invention est de mettre en oeuvre un procédé de fonctionnement d'un actionneur apportant des améliorations aux procédés connus de l'art antérieur et palliant aux inconvénients cités précédemment. En particulier, le procédé de fonctionnement selon l'invention peut aisément être mis en oeuvre par différents dispositifs de commande et, en particulier, par ceux comprenant un boîtier de commande à exclusion mécanique. Ainsi, des installations existantes peuvent être équipées avec de nouveaux dispositifs de fermeture sans nécessiter le remplacement des anciens boîtiers de commande.

Le procédé de fonctionnement selon l'invention est caractérisé par la partie caractérisante de la revendication 1.

Différentes variantes d'exécution du procédé sont définies par les revendications dépendantes 2 à 9.

Le dispositif selon l'invention est défini par la revendication indépendante 10.

Le dessin annexé représente, à titre d'exemples, des modes d'exécution du procédé de fonctionnement selon l'invention.

La figure 1 est un schéma d'un actionneur permettant l'entraînement d'un élément de fermeture, d'occultation ou de protection solaire.

Les figures 2 à 5 sont des chronogrammes expliquant les différentes interprétations qui peuvent être faites d'un appui sur une touche de commande d'un dispositif mettant en oeuvre le procédé selon l'invention.

Les figures 6a et 6b sont des ordinogrammes d'une procédure de réglage du sens de rotation du moteur engendré par un ordre de commande.

La figure 7 est un ordinogramme d'une procédure de définition d'une position de fin de course.

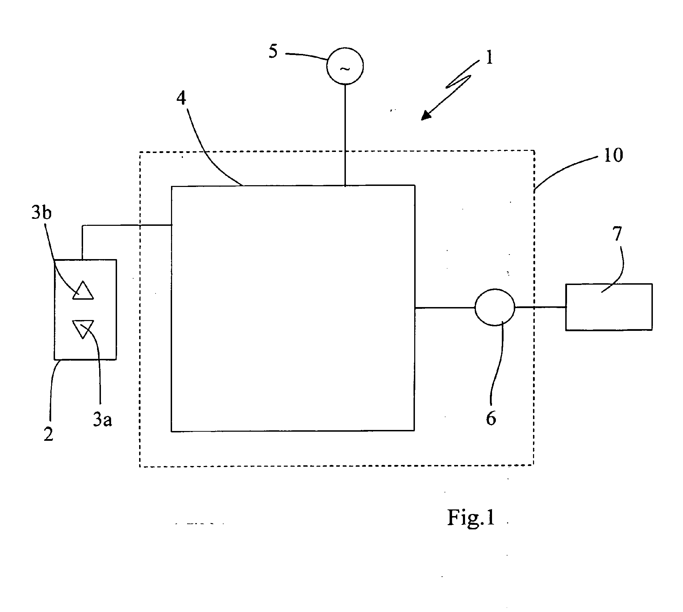

L'installation 1 représentée à la figure 1 comprend un actionneur 10 pour la manoeuvre d'un élément mobile 7 de fermeture, d'occultation ou de protection solaire tel que par exemple un volet roulant, une porte ou un store, ou tout type d'écran mobile. Cet actionneur 10 est alimenté par le réseau 5 de distribution d'énergie électrique. Il est relié à une interface utilisateur appelée boîtier de commande 2. Il est également à noter que le réseau 5 peut alimenter l'actionneur par le biais du boîtier de commande, comme décrit par exemple dans le brevet EP 0 822 315.

Le boîtier 2 comprend différentes touches. Il comprend, en particulier, une touche 3b permettant à l'utilisateur de commander, par son actionnement, une action d'ouverture (ou d'enroulement) de l'élément mobile 7 et une touche 3a permettant à l'utilisateur de commander, par son actionnement, une action de fermeture (ou de déroulement) de l'élément mobile 7.

L'actionneur 10 comprend un moteur 6 et une unité électronique 4 de commande de l'alimentation électrique de ce moteur. L'unité électronique 4 comprend notamment une unité logique de traitement tel qu'un microcontrôleur permettant de recevoir par le biais d'une interface les signaux électriques émis par le boîtier de commande et de les interpréter. Elle comprend également des mémoires par exemple des mémoires de type réinscriptible permettant de stocker par exemple des valeurs représentatives des positions de fin de course de l'élément mobile et une valeur associant un sens de rotation du moteur à chacune des touches 3a et 3b. Elle comprend également des compteurs et des mémoires pour stocker différentes valeurs de temporisations, ces temporisations étant déclenchées consécutivement à des actions sur les touches 3a et 3b et/ou consécutivement à l'échéance d'autres temporisations. L'unité électronique comprend en outre des composants de puissance pour l'alimentation du moteur. Elle comprend des interrupteurs commandés par l'unité électronique et, selon le type de moteur utilisé, elle comprend un convertisseur de tension.

Le moteur 6 permet l'entraînement de l'élément mobile 7. Il est de ce fait cinématiquement lié à celui-ci soit directement, soit par le biais d'un réducteur.

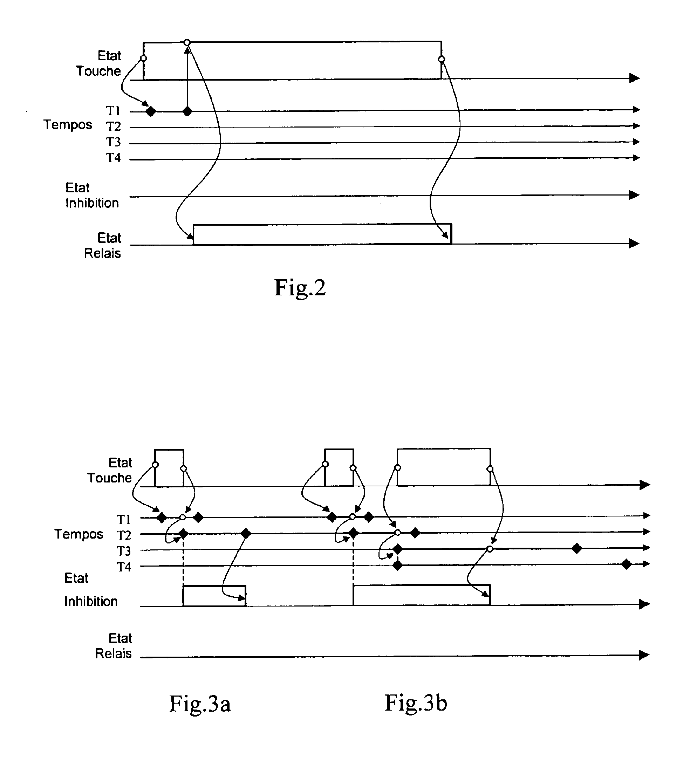

Dans un premier mode de réalisation du procédé de fonctionnement de l'actionneur, comme représenté à la figure 2, un appui sur la touche de commande 3a ou sur la touche de commande 3b pendant une durée supérieure à la durée t1 d'une temporisation T1 déclenche le basculement d'un relais alimentant le moteur et, par conséquent, la rotation de celui-ci dans le sens associé à la touche de commande qui a été actionnée. La temporisation T1 est déclenchée dès l'enfoncement de la touche de commande. Elle est représentée par un trait gras délimité par un losange de début de temporisation et un losange de fin de temporisation. Le relais revient à son état initial, coupant l'alimentation du moteur, dès que la touche est relâchée.

Comme représenté à la figure 3, un appui sur la touche pendant une durée inférieure à la durée t1 de la temporisation T1 déclenche dès que la touche est relâchée une temporisation T2 dite de début d'inhibition. Au cours de cette temporisation, l'unité électronique est inhibée, c'est-à-dire que les appuis sur les différentes touches de commande du boîtier de commande ne permettent pas de commander la rotation du moteur. Il faut attendre la fin de la période d'inhibition pour pouvoir de nouveau commander la rotation du moteur par un appui sur l'une des touches de commande.

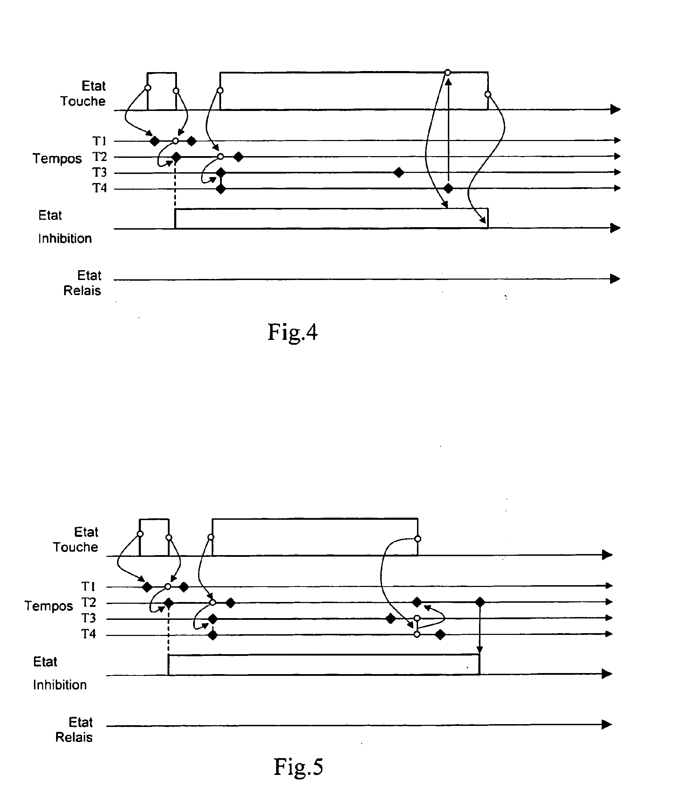

L'échéance de la temporisation T2 déclenche, faute d'appui sur l'une des touches de commande pendant cette temporisation, l'échéance de la période d'inhibition. Cependant, un nouvel appui sur l'une des touches de commande avant l'échéance de la temporisation T2 prolonge la période d'inhibition et déclenche simultanément une temporisation T3 d'une durée t3 et une temporisation T4 d'une durée t4. Si la touche est enfoncée pendant une durée inférieure à la durée t3 ou supérieure à la durée t4, la période d'inhibition prend fin dès le relâchement de la touche de commande comme représenté aux figures 3 et 4. Par contre, comme représenté à la figure 5, si la touche est enfoncée pendant une durée supérieure à la durée t3 et inférieure à la durée t4, le relâchement de la touche de commande déclenche une nouvelle temporisation T2 durant laquelle la période d'inhibition est prolongée.

Ainsi quatre temporisations sont utilisées: une temporisation T1 pour discriminer un appui bref d'un appui prolongé, une temporisation T2 d'attente et d'inhibition, des temporisations T3 et T4 de calibrage des appuis de validation.

Chaque appui sur une touche de commande effectué alors qu'une temporisation T2 est en cours et dont la durée est comprise entre une durée t3 et t4 incrémente un compteur ou différents compteurs associés aux différentes touches. Dès que les compteurs atteignent des valeurs prédéfinies, des commandes de configuration sont émises et elles provoquent des opérations de configuration qui sont réalisées dans l'actionneur. Il peut par exemple s'agir d'un enregistrement durable d'un paramètre de fonctionnement de l'actionneur, tel que la valeur représentative d'une position de fin de course ou tel que la relation entre les touches de commande et les sens de mouvement de l'actionneur.

L'état d'inhibition est prolongé tant que les temporisations sont relayées entre elles. Dès la sortie de la période d'inhibition, les temporisations éventuellement actives sont annulées et un nouvel appui sur une touche d'une durée supérieure à la durée t1 provoque l'activation du moteur.

Ce premier mode d'exécution est plus particulièrement destiné aux actionneurs dont l'unité électronique de commande est alimentée en permanence. Si tel n'est pas le cas (par exemple lorsque l'actionneur est alimenté par l'intermédiaire du boîtier de commande), on peut prévoir une alimentation de veille de l'unité électronique s'effectuant par exemple par déchargement d'un condensateur à la suite d'une commande particulière. On peut alors prévoir d'imposer un mouvement de quelques secondes avant tout appui très bref, ceci afin de charger le condensateur d'alimentation.

Un deuxième mode de réalisation du procédé de fonctionnement de l'actionneur est plus particulièrement destiné aux actionneurs dont l'unité électronique n'est pas alimentée en permanence mais peut éventuellement convenir à d'autres d'actionneurs.

Le premier mode d'exécution n'est pas adapté à ce type d'actionneur puisque l'unité électronique ne peut mesurer les temps pendant lesquelles elle n'est pas alimentée.

Ce deuxième mode de réalisation prévoit donc que l'inhibition concerne au moins la première commande suivant une action particulière. Chaque action particulière provoque la mise à zéro d'un compteur et chaque nouvel appui sur l'une des touches de commande, dont la durée est comprise entre les durées t3 et t4, provoque l'incrémentation de ce compteur. La fin de la période d'inhibition est déclenchée lorsque le compteur atteint une valeur prédéfinie.

Dans les deux modes de réalisation, les appuis permettant l'incrémentation des compteurs et/ou la prolongation de la période d'inhibition dits appuis de validation sont calibrés, c'est-à-dire que leur durée doit être comprise entre la durée t3 et la durée t4 comme schématisé aux figures 3, 4 et 5. De cette manière, les séquences d'appuis de validation sont très précises et ne seront que difficilement reproductibles de manière intempestive.

L'action particulière peut être un appui sur une des touches de commande d'une durée inférieure à la durée t1 au-delà de laquelle un ordre de commande du moteur est déclenché. Cette action particulière pourrait également être une mise sous tension de l'actionneur ou une action de type double appui sur les touches de commande simultanément.

De plus, pour limiter le temps pendant lequel le moteur ne répond pas aux ordres de commande, si l'action particulière (un appui bref par exemple) est réalisée de manière intempestive, on peut choisir une période d'inhibition courte, dans laquelle ne peut avoir lieu qu'une partie de séquence de confirmation. Une partie de séquence de validation correctement exécutée dans la plage de temps peut alors déclencher une prolongation de la période d'inhibition (une temporisation peut pour ce faire être remise à zéro ou un compteur peut être incrémenté).

Un appui en dehors de la plage de temps définie par l'échéance des temporisations T3 et T4 met fin à la période d'inhibition.

Chaque appui de validation correctement effectué peut réinitialiser la période d'inhibition jusqu'au dernier appui de la séquence de validation de configuration.

Dans le but d'éviter un blocage provoqué suite à un appui bref intempestif et pendant lequel il n'est pas possible de commander l'actionneur on peut choisir, dans la première période d'inhibition, de n'inhiber qu'un seul sens de rotation, par exemple celui correspondant à la touche de commande sur laquelle a été effectué un appui bref ayant valeur d'appui particulier. On évite alors de bloquer la commande du moteur dans le cas où l'utilisateur réalise un appui bref par erreur dans un sens alors qu'il souhaite faire tourner le moteur de l'actionneur dans l'autre sens. La temporisation d'inhibition est alors effacée si le premier appui durant la période d'inhibition est un appui sur la touche commandant la rotation du moteur dans le sens opposé au sens commandé par la touche sur laquelle a été exercé l'appui particulier.

Dans le cas du deuxième mode d'exécution, on peut réaliser deux compteurs incrémentés respectivement par les appuis de validation effectués sur chacune des deux touches de commande. Lors du début de la période d'inhibition, le compteur d'appuis associé à la touche commandant l'activation de l'actionneur dans le sens opposé au sens commandé par la touche sur laquelle l'appui particulier a été effectué peut être incrémenté de manière à ce que la somme des valeurs stockées dans les compteurs atteigne une valeur prédéfinie provoquant la fin de la période d'inhibition.

On peut prévoir également que l'actionneur génère un retour d'information tel que par exemple par un léger mouvement de l'élément mobile pour avertir l'installateur ou l'utilisateur effectuant des opérations de configuration que celles-ci ont bien été effectuées. De préférence, ce retour d'information intervient au cours de la dernière partie de la séquence de validation. Dans le deuxième mode de réalisation, le retour d'information doit être fait pendant un appui sur l'une des touches sinon l'actionneur n'est pas alimenté. Dans ce cas, le mouvement de l'actionneur est permis, bien qu'il se fasse pendant la période d'inhibition. En effet, il ne s'agit pas d'une réponse à un ordre de commande de l'utilisateur, mais d'un ordre de commande généré au niveau de l'unité électronique de commande du moteur.

Pour sécuriser les opérations de configuration, on peut également utiliser les deux modes de réalisation du procédé dans un cadre particulier. Dans une phase de pré-configuration (les mémoires étant vierges de tout enregistrement), lors de la première mise sous tension par exemple, tous les appuis brefs sont pris en compte, quelle que soit la position courante.

Lors des phases de configuration postérieures ou de reconfiguration, les appuis brefs sur les touches de commande peuvent n'être considérés pour la validation d'une position que dans la mesure où la position courante est une position particulière telle que par exemple une position de fin de course ou une position intermédiaire.

La phase de configuration peut être marquée par un indicateur de configuration. Si cet indicateur est actif, c'est-à-dire si le dispositif est partiellement ou est, de préférence, complètement configuré, les appuis sur les touches de commande donneront lieu immédiatement à un mouvement de l'élément mobile, à moins que celui-ci ne se trouve dans une position particulière. Dans ce cas, il faudra maintenir l'appui pendant une durée supérieure à le durée prédéterminée t1 pour que celui-ci soit interprété comme un ordre de déplacement. Un appui d'une durée inférieure à la durée prédéterminée t1 sera considéré comme un signal de mise en mode de configuration du dispositif.

On peut prévoir qu'un tel fonctionnement entraînant un retard à la commande de mouvement, ne concerne qu'une touche.
Si l'élément mobile se trouve par contre dans une position quelconque, toute commande est immédiatement prise en compte et l'actionneur pour démarrer sans retard perceptible pour l'utilisateur.

Si l'indicateur est inactif, et quelque soit la position de l'élément mobile, un test est réalisé sur la durée d'appui. Le démarrage du moteur est donc nécessairement retardé de la durée prédéterminée t1.

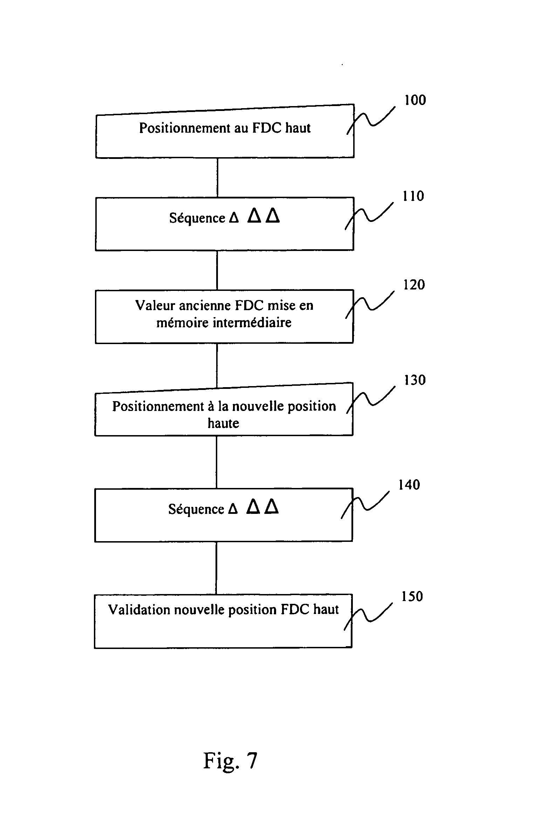

Un exemple de procédure de reconfiguration d'une position de fin de course haute est décrite ci-après en référence à la figure 7. Elle est appliquée à un actionneur fonctionnant selon le procédé de l'invention.

Dans une première étape 100, l'utilisateur amène l'élément mobile en position haute.

Il effectue ensuite, dans une étape 110, une séquence de validation (ΔΔΔ) ce qui a pour effet, dans une étape 120, de vider la mémoire de la valeur associée à la position de fin de course haute courante, cette valeur étant alors conservée dans une mémoire temporaire. La séquence de validation (ΔΔΔ) correspond à un appui bref sur la touche 3b (par exemple d'une durée inférieure à 0.5 seconde) suivi de deux appuis de validation sur cette même touche, les appuis de validation présentant une durée comprise entre t3 et t4 avec, par exemple t3=2 secondes et t4=3 secondes. L'utilisation de temporisations de l'ordre de la seconde permet la reproduction aisée par l'utilisateur des séquences de validation. De plus, la durée des appuis nécessaires à la reproduction de ces séquences font qu'il est pratiquement impossible que celles-ci soient reproduites par inadvertance.

Dans une étape 130, l'utilisateur commande la rotation du moteur dans un sens ou dans l'autre jusqu'à ce que l'élément mobile atteigne la nouvelle position de fin de course haute choisie.

Il effectue ensuite, dans une étape 140, une séquence de validation (ΔΔΔ) ce qui a pour effet, dans une étape 150, de mémoriser la nouvelle valeur associée à la nouvelle position de fin de course haute. La séquence de validation (ΔΔΔ) correspond à un appui bref sur la touche 3b suivi de deux appuis de validation sur cette même touche, les appuis de validation présentant une durée comprise entre t3 et t4. Le nombre d'appuis de validation permettant de modifier le contenu de la mémoire peut également être différent de deux, en particulier supérieur à deux pour sécuriser davantage les valeurs enregistrées contre les manoeuvres intempestives.

Tant que cette nouvelle position n'est pas validée par une séquence correcte, il est possible de mettre fin à la période d'inhibition. L'ancienne valeur de fin de course est alors remise dans la mémoire associée à la fin de course.

Pendant une séquence de configuration, les commandes de déplacement se font de la même manière que les commandes de déplacement hors de la séquence de configuration.

De préférence, les séquences de validation des différents réglages ont toutes la même longueur. On peut prévoir cependant que certaines séquences (par exemple une séquence de retour à une configuration par défaut) soient plus longues dans le premier mode d'exécution du procédé.

Dans le cas de la configuration d'une position particulière, le dernier appui de la séquence de validation déclenche une nouvelle temporisation T2. A l'issue de cette temporisation T2 et si aucun autre appui n'est en cours, l'unité électronique de commande gère la reconfiguration de la position comme décrit précédemment.

En revanche, si un nouvel appui a lieu, l'unité électronique de commande mesure la durée de l'appui et relance un compteur d'appuis maintenus pendant une durée comprise entre t3 et t4. Si un certain nombre d'appuis est détecté, une configuration différente telle qu'une configuration par défaut est validée.

Le tableau suivant donne, en fonction des appuis effectués sur le boîtier de commande, quelques exemples des réactions de l'actionneur et des valeurs des compteurs C1 et C2 respectivement associés aux touches 3a et3b:

| Action | C1 | C2 | Réaction électronique |
|---|---|---|---|
| Appui bref sur touche 3a | 0 | 0 | Initialisation inhibition |
| Appui sur touche 3a = Tvalid | 1 | 0 | Réinitialisation inhibition |
| Appui sur touche 3a = Tvalid | 2 | 0 | validation position fin de course haute |
| | 5 | 5 | Fin inhibition |
| Appui bref sur touche 3a | 0 | 0 | Initialisation inhibition |
| Appui sur touche 3b | 0 | 5 | Fin d'inhibition et commande de |
| | 5 | 5 | mouvement vers le bas |
| Appui bref sur touche 3a | 0 | 0 | Initialisation inhibition |
| Appui sur touche 3a = Tvalid | 1 | 0 | Réinitialisation inhibition |
| Appui sur touche 3b = Tvalid | 1 | 1 | Inversion sens des commandes |
| | 5 | 5 | Fin inhibition |
| Appui bref sur touche 3 a | 0 | 0 | Initialisation inhibition |
| Appui sur touche 3a = Tvalid | 1 | 0 | Réinitialisation inhibition |
| Appui sur touche 3a > Tvalid | 5 | 0 | Fin de séquence de validation |
| Appui sur touche 3a | 5 | 5 | Commande de mouvement vers le haut |

| | | | |
|---|---|---|---|
| Tvalid représente n'importe quelle durée comprise entre la durée t3 et la durée t4. | | | |

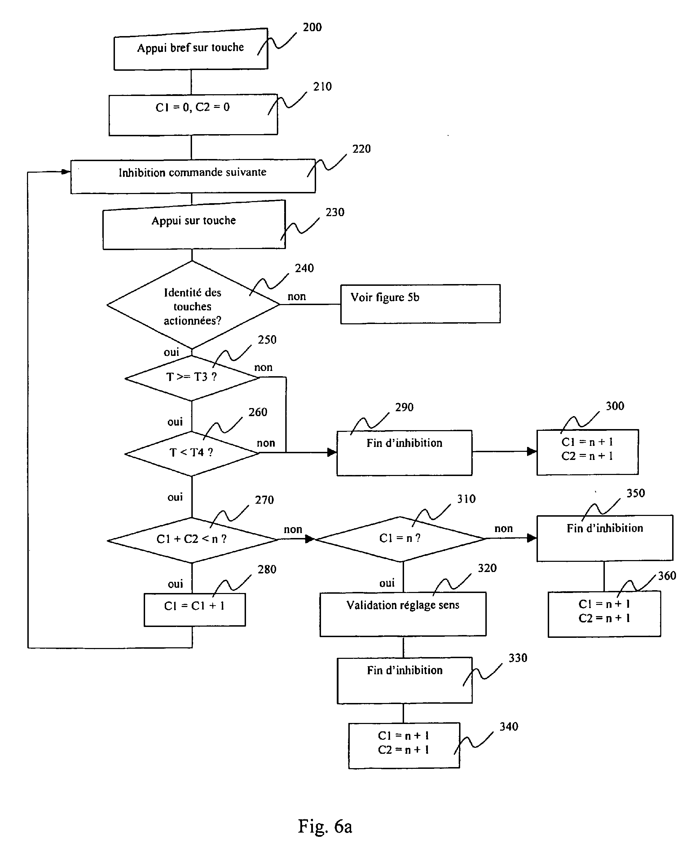

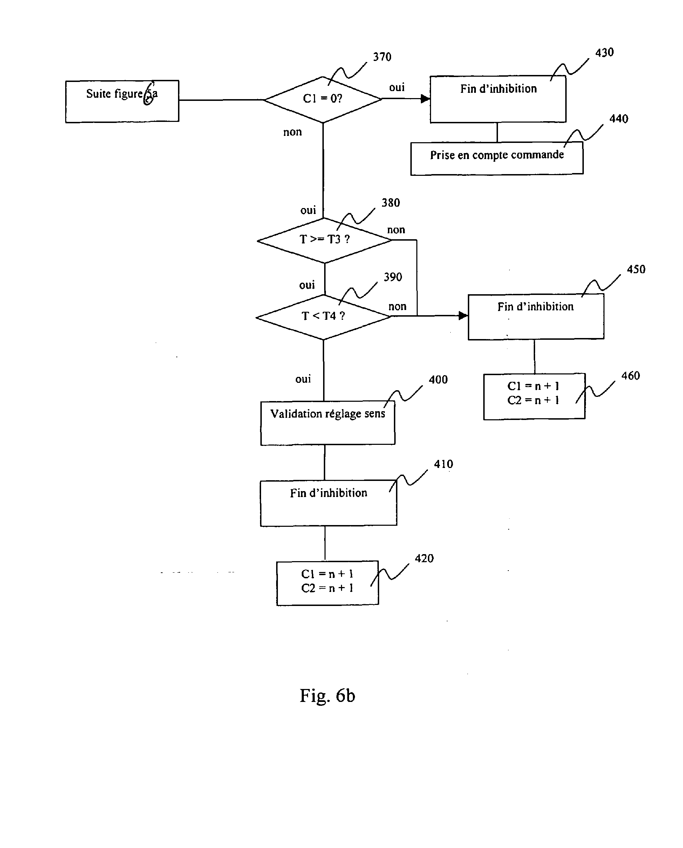

Une procédure de configuration de sens de rotation du moteur est décrite ci-après en référence à la figure 6.

Dans une première étape 200, l'utilisateur effectue un appui bref sur l'une des touches du boîtier de commande. Cette action a pour conséquence de réinitialiser, dans une étape 210, deux compteurs C1 et C2 associés respectivement aux deux touches de commande 3a et 3b du boîtier de commande et de déclencher, dans une étape 220, une période d'inhibition. Lors d'une étape 230, l'utilisateur effectue un appui sur une touche du boîtier de commande. Cet appui est testé au niveau d'une étape de test 240.

Si l'appui est effectué sur la même touche de commande que celle de l'étape 200, on vérifie aux étapes 250 et 260 que sa durée est supérieure à la durée t3 et inférieure à la durée t4. Si tel n'est pas le cas, on met fin à la période d'inhibition à une étape 290 et on incrémente, à une étape 300, chacun des compteurs C1 et C2 au-delà d'une valeur prédéfinie n. Si tel est le cas, on vérifie au niveau d'un test 270 que la somme des valeurs stockées dans les compteurs n'est pas supérieure à une valeur prédéfinie. On vérifie ensuite au niveau d'un test 310 si la somme des valeurs stockées dans les compteurs est égale à la valeur prédéfinie n. Si tel est le cas, on valide dans une étape 320, une opération de réglage des sens de rotation de l'actionneur associés aux touches de commande, on met fin à la période d'inhibition dans une étape 330 et on incrémente, dans une étape 340, chacun des compteurs C1 et C2 au-delà de la valeur prédéfinie n. Si au niveau d'un test 310, la somme des valeurs stockées dans les compteurs est strictement supérieure à la valeur prédéfinie n, on met fin à la période d'inhibition à une étape 350 et on incrémente, dans une étape 360, chacun des compteurs C1 et C2 au-delà de la valeur prédéfinie n.

Si le résultat du test 240 est négatif, c'est-à-dire si l'appui de l'étape 230 est effectué sur une autre touche de commande que celle de l'étape 200, on teste dans une étape 370 la valeur du compteur C1. Si sa valeur est nulle, c'est-à-dire s'il n'y a eu, entre l'appui bref de l'étape 200 et celui de l'étape 230, aucun appui de validation n'ayant permis l'incrémentation du compteur C1 lié à la touche actionnée lors de l'étape 200, on met fin à la période d'inhibition dans une étape 430 et la commande associée à la touche actionnée dans une étape 230 est exécutée dans une étape 440. Par contre, si la valeur du compteur C1 est non nulle, on vérifie lors d'étapes 380 et 390 que la durée de l'appui de l'étape 230 est supérieure à la durée t3 et inférieure à la durée t4. Si tel n'est pas le cas, on met fin à la période d'inhibition à une étape 450 et on incrémente, à une étape 460, chacun des compteurs C1 et C2 au-delà d'une valeur prédéfinie n. Si tel est le cas, on valide dans une étape 400, une opération de réglage des sens de rotation de l'actionneur associés aux touches de commande, on met fin à la période d'inhibition dans une étape 410 et on incrémente, dans une étape 420, chacun des compteurs C1 et C2 au-delà de la valeur prédéfinie n.

Dans les deux modes de réalisation, le simple comptage du nombre d'impulsions sur l'une ou l'autre touche de commande est insuffisant pour distinguer deux séquences, comme par exemple aABA et aAAB, dans lesquelles les caractères a et A désignent respectivement des appuis court et long sur la touche 3a et le caractère B désigne un appui long sur la touche 3b, un appui long ayant ici une durée comprise entre t3 et t4.

Dans ce cas, l'homme du métier dispose de techniques connues de reconnaissance de la configuration, par exemple en affectant dans la mémoire un indicateur ou drapeau relatif à chacune des configurations pré-enregistrées. Cet indicateur est mis à l'état haut pour toutes les configurations potentiellement valides à un instant donné compte tenu des appuis déjà effectués. Au fur et à mesure qu'on avance dans le processus de reconnaissance, certaines configurations sont éliminées et les indicateurs correspondants passent à l'état bas. Dès qu'aucun indicateur n'est plus à l'état haut, on sort de l'état d'inhibition. On sort aussi de l'état d'inhibition si un seul indicateur est à l'état haut, mais en exploitant l'information résultant de la séquence valide ainsi identifiée.

Des avantages des modes d'exécution du procédé décrits précédemment résident dans le fait que, contrairement aux procédés connus de l'art antérieur, il n'est pas nécessaire d'effectuer d'action particulière pour qu'il soit mis fin à la période d'inhibition. En effet, il est mis fin à la période d'inhibition si une séquence valide d'appui est reconnue. Il peut être mis fin à cette période si un appui sur une touche de commande n'est pas reconnu comme un appui de validation, c'est-à-dire si sa durée est inférieure à la durée t3 ou supérieure à la durée t4. Il peut également être mis fin à cette période si aucun appui n'est effectué durant une durée t2 débutant en même temps que la période d'inhibition. Il peut évidemment également être mis fin à cette période par un appui sur une touche non concernée par la période d'inhibition.

Le procédé de fonctionnement décrit est bien entendu également applicable à l'aide d'un outil spécifique de programmation, qui permet de reproduire les séquences d'appuis, tout en calibrant avec précision les durées équivalentes aux appuis sur les touches du boîtier de commande. Alternativement, s'il est fait usage d'un outil spécifique, des séquences de programmation particulières, difficilement réalisables à partir d'un boîtier de commande, pourront être combinées à des séquences telles que celles décrites dans la présente demande pour réaliser l'ensemble du processus de programmation.

## Revendications

1. Procédé de fonctionnement d'un actionneur (10), en particulier pour l'entraînement d'ouvrants, d'écrans mobiles ou de protections solaires (7), comprenant un moteur (6) et une unité électronique (4) de commande de l'alimentation électrique du moteur pour provoquer le mouvement de l'actionneur dans un premier sens ou dans un deuxième sens, l'actionneur étant relié à un boîtier de commande (2) agissant sur l'unité électronique et muni d'au moins une touche (3a, 3b) de commande du mouvement de l'actionneur, un premier appui particulier sur la touche de commande provoquant le basculement de l'unité électronique dans un état d'inhibition dans lequel au moins un nouvel appui sur la touche est analysé mais ne donne pas naissance à une commande de mouvement de l'actionneur, **caractérisé en ce que** l'appui particulier présente une durée inférieure à une première durée t1 au-delà de laquelle un appui donne naissance à une commande de mouvement de l'actionneur, si l'unité électronique n'est pas déjà en état d'inhibition.

2. Procédé de fonctionnement selon la revendication 1, **caractérisé en ce qu'**un appui d'une durée comprise entre une troisième durée t3 et une quatrième durée t4, réalisé au cours de l'état d'inhibition est considéré comme un appui de validation et provoque une incrémentation d'un compteur et/ou un basculement d'un indicateur dans une mémoire de l'unité électronique.

3. Procédé de fonctionnement selon la revendication précédente, **caractérisé en ce qu'**une séquence d'appuis comprenant un nombre prédéfini d'appuis de validation est reconnue comme une séquence valide.

4. Procédé de fonctionnement selon la revendication précédente, **caractérisé en ce qu'**une séquence valide donne naissance à une commande de configuration.

5. Procédé de fonctionnement selon les revendications 3 ou 4 **caractérisé en ce qu'**une séquence valide comprend un ou plusieurs appuis de validation sur une première touche de commande correspondant à un premier sens de mouvement et sur une deuxième touche de commande correspondant à un deuxième sens de mouvement.

6. Procédé de fonctionnement selon l'une des revendications 1 à 5, **caractérisé en ce que** l'état d'inhibition cesse dans au moins l'une des conditions suivantes :
- dès la fin d'un appui non reconnu comme un appui de validation,
- dès qu'une séquence de configuration est reconnue valide,
- lorsqu'aucun appui sur une touche n'intervient au cours d'une deuxième durée t2 débutant à l'entrée dans l'état d'inhibition,
- lorsqu'un appui est détecté sur une touche de commande autre que celle ou celles dont les appuis sont concernés par l'état d'inhibition.

7. Procédé de fonctionnement selon l'une des revendications précédentes, **caractérisé en ce que** l'unité électronique n'est placée dans un état d'inhibition que si le moteur est placé préalablement dans une position particulière.

8. Procédé de fonctionnement selon l'une des revendications précédentes, **caractérisé en ce qu'**un appui sur une touche de commande provoque, par action mécanique sur un contact, l'alimentation de l'unité électronique.

9. Dispositif (1) comprenant un boîtier (2) de commande muni d'au moins une touche (3a, 3b) de commande, et un actionneur (10) comprenant un moteur (6) et une unité électronique (4) de commande de l'alimentation du moteur reliée au moteur et, de manière filaire ou sans fil, au boîtier de commande, **caractérisé en ce qu'**il comprend des moyens de gestion électronique et/ou mécanique des appuis sur la ou les touches du boîtier de commande permettant la mise en oeuvre du procédé selon l'une des revendications 1 à 8.

## Patentansprüche

1. Betriebsverfahren eines Aktuators (10), insbesondere zum Antreiben von Öffnungen, beweglichen Abschirmungen oder Sonnenschutzvorrichtungen (7), der einen Motor (6) und eine elektronische Steuerungsvorrichtung (4) der elektrischen Versorgung des Motors umfasst, um die Bewegung des Aktuators in eine erste Richtung oder in eine zweite Richtung hervorzurufen, wobei der Aktuator mit einem Steuerkasten (2) verbunden ist, der auf die elektronische Einheit einwirkt und mit mindestens einer Steuertaste (3a, 3b) der Bewegung des Aktuators ausgestattet ist, wobei ein erster spezieller Druck auf die Steuertaste das Umschalten der elektronischen Einheit in einen Hemmungszustand verursacht, in dem mindestens ein neuer Druck auf die Taste analysiert wird, aber keinen Bewegungsbefehl des Aktuators hervorbringt, **dadurch gekennzeichnet, dass** der besondere Druck eine Dauer unter einer ersten Dauer t1 aufweist, jenseits der ein Druck einen Bewegungsbefehl des Aktuators herbringt, wenn sich die elektronische Einheit nicht bereits im Hemmungszustand befindet.

2. Betriebsverfahren nach Anspruch 1, **dadurch gekennzeichnet, dass** ein Druck einer Dauer zwischen einer dritten Dauer t3 und einer vierten Dauer t4, durchgeführt während des Hemmungszustands, als ein Bestätigungsdruck betrachtet wird und eine Inkrementierung eines Zählers und/oder ein Umschalten eines Indikators in einem Speicher der elektronischen Einheit hervorruft.

3. Betriebsverfahren nach vorangehendem Anspruch, **dadurch gekennzeichnet, dass** eine Drucksequenz mit einer vorbestimmten Anzahl von Bestätigungsdrücken als eine gültige Sequenz erkannt wird.

4. Betriebsverfahren nach vorangehendem Anspruch, **dadurch gekennzeichnet, dass** eine gültige Sequenz einen Konfigurationsbefehl hervorbringt.

5. Betriebsverfahren nach den Ansprüchen 3 oder 4, **dadurch gekennzeichnet, dass** eine gültige Sequenz einen oder mehrere Bestätigungsdrücke auf eine erste Steuertaste umfasst, was einer ersten Bewegungsrichtung entspricht, und auf eine zweite Steuertaste, was einer zweiten Bewegungsrichtung entspricht.

6. Betriebsverfahren nach einem der Ansprüche 1 bis 5, **dadurch gekennzeichnet, dass** der Hemmungszustand unter mindestens einer der folgenden Bedingungen aufhört:
- ab dem Ende eines Drucks, der nicht als ein Bestätigungsdruck erkannt wird,
- sobald eine Konfigurationssequenz als gültig erkannt wird,
- wenn während einer zweiten Dauer t2, die am Eingang in den Hemmungszustand beginnt, kein Druck auf eine Taste erfolgt,
- wenn ein Druck auf einer anderen Steuertaste als der oder denen festgestellt wird, deren Drücke von dem Hemmungszustand betroffen sind.

7. Betriebsverfahren nach einem der vorangehenden Ansprüche, **dadurch gekennzeichnet, dass** die elektronische Einheit nur dann in einen Hemmungszustand versetzt wird, wenn der Motor zuvor in eine besondere Stellung platziert wurde.

8. Betriebsverfahren nach einem der vorangehenden Ansprüche, **dadurch gekennzeichnet, dass** ein Druck auf eine Steuertaste die Versorgung der elektronischen Einheit durch mechanische Wirkung auf einen Kontakt hervorruft.

9. Vorrichtung (1), die einen Steuerkasten (2), der mit mindestens einer Steuertaste (3a, 3b) ausgestattet ist, und einen Aktuator (10), der einen Motor (6) und eine elektronische Einheit (4) zur Steuerung der Versorgung des Motors umfasst, die mit dem Motor und, drahtgebunden oder drahtlos, mit dem Steuerkasten verbunden ist, umfasst, **dadurch gekennzeichnet, dass** sie elektronische und/oder mechanische Verwaltungsmittel der Drücke auf die Taste(n) des Steuerkastens umfasst, die die Umsetzung des Verfahrens nach einem der Ansprüche 1 bis 8 erlauben.

## Claims

1. A method of operating an actuator (10), in particular for driving openings, moving screens or solar blinds (7), comprising a motor (6) and an electronic unit (4) controlling the electrical power supply to the motor to provoke the movement of the actuator in a first direction or in a second direction, the actuator being linked to a control module (2) acting on the electronic unit and provided with at least one button (3a, 3b) controlling the movement of the actuator, wherein a first particular press on the control button causes the electronic unit to switch over to a disabled state in which at least one further press on the button is analyzed but does not give rise to an actuator movement command and wherein the particular press presents a duration shorter than a first duration t1 beyond which a press gives rise to an actuator movement command, if the electronic unit is not already in the disabled state.

2. The operating method as claimed in claim 1, wherein a press of a duration of between a third duration t3 and a fourth duration t4, performed during the disabled state, is considered as a validation press and can cause a counter to be incremented and/or an indicator in a memory of the electronic unit to be switched.

3. The operating method as claimed in claim 2, wherein a sequence of presses comprising a predefined number of validation presses is recognized as a valid sequence.

4. The operating method as claimed in claim 3, wherein a valid sequence gives rise to a configuration command.

5. The operating method as claimed in claim 3 or 4, wherein a valid sequence includes one or more validation presses on a first control button corresponding to a first direction of movement and on a second control button corresponding to a second direction of movement.

6. The operating method as claimed in one of claims 1 to 5, wherein the disabled state ceases in at least one of the following conditions:
- at the end of a press not recognized as a validation press,
- when a configuration sequence is recognized to be valid,
- when no press on a button occurs during a second duration t2 starting on entering into the disabled state,
- when a press is detected on a control button other than that or those for which the presses are affected by the disabled state.

7. The operating method as claimed in one of the preceding claims, wherein the electronic unit is placed in a disabled state only if the motor is first placed in a particular position.

8. The operating method as claimed in one of the preceding claims, wherein a press on a control button causes, by mechanical action on a contact, the electronic unit to be supplied with power.

9. A device (1) comprising a control module (2) provided with at least one control button (3a, 3b), and an actuator (10) comprising a motor (6) and an electronic unit (4) controlling the motor power supply linked to the motor and, by wired or by wireless means, to the control module, which comprises electronic and/or mechanical means of managing presses on the button or buttons of the control module for implementing the method as claimed in one of claims 1 to 8.
